(19) Europäisches Patentamt
European Patent Office
Office européen des brevets

(11) **EP 2 544 020 B1**

(12) **FASCICULE DE BREVET EUROPEEN**

(45) Date de publication et mention de la délivrance du brevet:
**02.04.2014 Bulletin 2014/14**

(51) Int Cl.:
***G01S 13/58*** *(2006.01)*

(21) Numéro de dépôt: **12175094.7**

(22) Date de dépôt: **05.07.2012**

(54) **Procédé et dispositif de détection d'une cible masquée par des réflecteurs de forte énergie**

Verfahren und Vorrichtung zur Detektion eines Ziels, das von starken Energiereflektoren maskiert wird

Method and device for detecting a target masked by high-energy reflectors

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **06.07.2011 FR 1156126**

(43) Date de publication de la demande:
**09.01.2013 Bulletin 2013/02**

(73) Titulaire: **Rockwell-Collins France 31700 Blagnac (FR)**

(72) Inventeurs:
• **Vincent, François 31500 Toulouse (FR)**
• **Goy, Philippe 31500 Toulouse (FR)**

(74) Mandataire: **Delumeau, François Guy et al Cabinet Beau de Loménie 158, rue de l'Université 75340 Paris Cedex 07 (FR)**

(56) Documents cités:
**EP-A1- 2 320 247    US-B2- 7 479 920**

• **YUNHAN DONG: "L-band VV clutter analysis for natural land", RADAR CONFERENCE, 2003. PROCEEDINGS OF THE INTERNATIONAL ADELAIDE, SA, AUSTRALIA 3-5 SEPT. 2003, PISCATAWAY, NJ, USA,IEEE, US, 3 septembre 2003 (2003-09-03), pages 625-630, XP010688777, DOI: 10.1109/RADAR.2003.1278814 ISBN: 978-0-7803-7870-4**
• **KUN LU ET AL: "Enhanced maneuvering targets detection via polynomial, phase modeling in over-the-horizon radars", RADAR CONFERENCE, 2004. PROCEEDINGS OF THE IEEE PHILADELPHIA, PA, USA APRIL 26-29, 2004, PISCATAWAY, NJ, USA,IEEE, 26 avril 2004 (2004-04-26), pages 444-449, XP010711569, DOI: 10.1109/NRC.2004.1316466 ISBN: 978-0-7803-8234-3**
• **GENYUAN WANG ET AL: "Maneuvering target detection in over-the-horizon radar by using adaptive chirplet transform and subspace clutter rejection", PROCEEDINGS OF INTERNATIONAL CONFERENCE ON ACOUSTICS, SPEECH AND SIGNAL PROCESSING (ICASSP'03) 6-10 APRIL 2003 HONG KONG, CHINA; [IEEE INTERNATIONAL CONFERENCE ON ACOUSTICS, SPEECH, AND SIGNAL PROCESSING (ICASSP)], IEEE, 2003 IEEE INTERNATIONAL CONFE, vol. 6, 6 avril 2003 (2003-04-06), pages VI_49-VI_52, XP010639413, DOI: 10.1109/ICASSP.2003.1201615 ISBN: 978-0-7803-7663-2**

**Description**

Arrière-plan de l'invention

La présente invention se situe dans le domaine du traitement du signal d'un radar mobile et aéroporté.

Elle vise plus particulièrement à permettre la détection d'une cible de faible énergie susceptible d'être masquée par des réflecteurs de forte énergie.

Elle trouve une application privilégiée mais non limitative pour la détection d'une cible de collision masquée par du fouillis de sol.

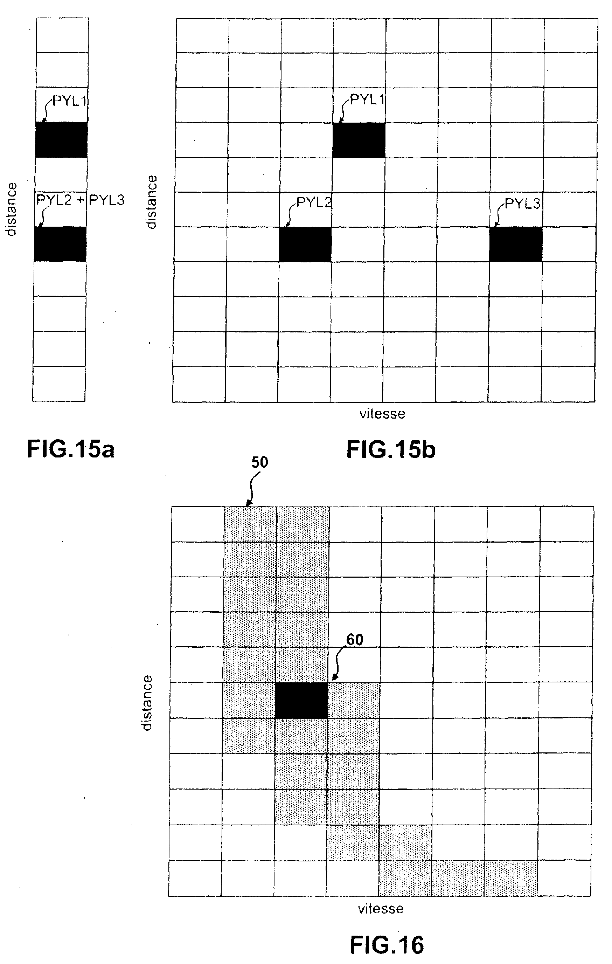

De façon connue, les radars utilisent fréquemment une cartographie distance vitesse radiale pour séparer les échos de toutes les cibles en distance et en vitesse. Cela revient à positionner les cibles dans un espace distance vitesse radiale discrétisé en cases, de façon connue de l'homme de l'art, tel que représenté à la figure 15b.

Le document EP 2 320 247 décrit une telle méthode.

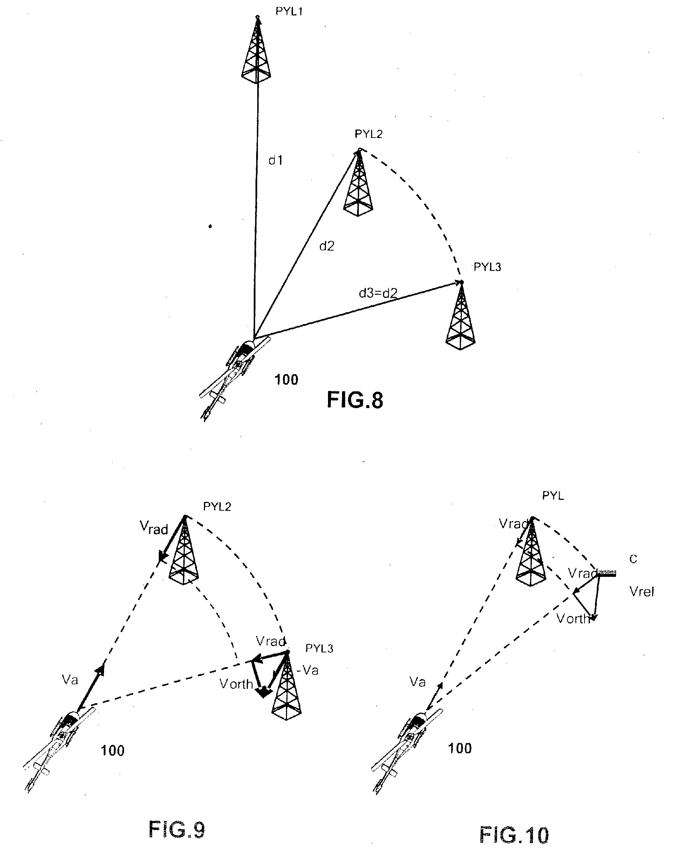

Sur la figure 15b, un pylône PYL1 est situé à une distance d1 du système radar ; deux pylônes PYL2 et PYL3 sont situés à même distance d2 mais vus sous des angles différents comme représenté à la figure 8.

Par application d'un traitement distance connu, le système radar obtient un vecteur appelé profil en distance, illustré figure 15a. Dans ce profil, le pylône PYL1 va générer, un maximum local d'énergie dans la case distance correspondant à la distance d1. De la même manière, les pylônes PYL2 et PYL3, qui se trouvent à la même distance d2 du système, vont générer un maximum local d'énergie dans la case correspondant à cette distance d2.

Ce traitement distance permet de distinguer le pylône PYL1 des pylônes PYL2 et PYL3 sur le profil distance. Il ne permet cependant pas de distinguer les pylônes PYL2 et PYL3.

Il est connu, pour résoudre ce problème, d'appliquer un traitement vitesse ; la sortie de ce traitement sur toutes les distances observées constitue une cartographie distance-vitesse radiale de l'environnement du système, et est illustrée schématiquement figure 15b.

Grâce à ce traitement vitesse, on peut maintenant distinguer les deux pylônes PYL2 et PYL3. En effet, comme ils sont vus sous des angles différents, ils ont des vitesses radiales différentes par rapport au système radar, comme illustré par la figure 9. Dès lors que cette différence de vitesse est supérieure à la résolution vitesse du système, les deux pylônes PYL2 et PYL3 apparaissent sur des cases vitesses différentes.

Il est par ailleurs connu, de séparer les cibles de leur environnement direct en comparant leurs niveaux d'énergie relatifs sur la cartographie distance vitesse, cet environnement direct pouvant être constitué uniquement de bruit, de réflecteurs ponctuels ou de réflecteurs étendus. Par exemple, et comme représenté à la figure 16, une cible 60 possédant une énergie supérieure au fouillis 50 peut être séparée de ce dernier.

En revanche, une cible mobile C située dans l'environnement direct du pylône PYL2 (voir figure 10), et dont l'énergie est du même niveau que celle de PYL2, est masquée par le pylône et ne peut pas être détectée.

Dans certaines configurations de vol et d'observation, les échos forts peuvent donc masquer durablement des cibles et empêcher leur détection. Ce masquage peut également être induit par les phénomènes de repliement.

Une première solution à ce problème, connue de l'homme de l'art, consiste à essayer de s'affranchir des phénomènes de repliement en faisant varier la fréquence de répétition des ondes radar. Cette méthode peut être utilisée lorsque la cible se retrouve par repliement vitesse dans la zone du fouillis, et consiste à déplacer la vitesse repliée pour faire en sorte que la cible se trouve en dehors de la zone du fouillis pour une des fréquences de répétition.

Malheureusement, il n'existe pas toujours de fréquence de répétition qui permette d'observer la cible en dehors de la zone fouillis.

Cette première solution n'est donc pas pleinement satisfaisante.

Une deuxième solution connue consiste à utiliser des algorithmes de type STAP (Space Time Adaptive Processing) et des réseaux d'antennes pour réduire les cibles fortes comme le fouillis de sol. Les algorithmes STAP utilisent un réseau d'antennes horizontal en réception pour exploiter l'angle d'arrivée des cibles et effectuer une discrimination selon l'angle d'azimut dans le plan Doppler, la vitesse radiale d'un écho du fouillis étant reliée à son angle d'arrivée.

Mais l'utilisation de réseaux d'antennes et l'application d'algorithmes STAP imposent de fortes contraintes sur le dimensionnement du système et augmentent la complexité de traitement.

Une troisième solution connue de l'homme de l'art pour séparer les cibles consiste à utiliser les propriétés polarimétriques des cibles et du fouillis. Ce procédé nécessite au moins deux antennes en émission et deux antennes en réception, ce qui complexifie sa mise en oeuvre.

On connait aussi la méthode présentée par Wang et al. dans le document « Manoeuvring target detection in over-the-horizon radar using adaptive clutter rejection and adaptive chirplet transform », et publiée le 4 novembre 2003, dans la revue IEE Proc. Radar Navig, Vol 150, No4. Cette méthode permet de détecter des cibles mobiles sur du fouillis de mer en effectuant une réjection de fouillis par projection puis en réalisant sur le signal un traitement vitesse itératif en deux dimensions par transformée en chirplets.

Cette méthode présente l'inconvénient majeur de ne pouvoir s'appliquer qu'à un radar fixe. Si elle permet effectivement la réjection d'un fouillis de mer, elle ne peut en aucun cas être utilisée pour la réjection d'un fouillis de sol.

Objet et résumé de l'invention

L'invention concerne un procédé mis en oeuvre dans un système mobile comportant un radar pour détecter, dans une scène, au moins un réflecteur cible d'un premier type prédéterminé, dit type cible, susceptible d'être masqué par au moins un réflecteur de forte énergie d'un deuxième type, dit type fort. Ce procédé comporte :

- une étape d'identification d'une zone de l'espace distance-vitesse radiale pouvant contenir des réflecteurs de forte énergie susceptibles de masquer les réflecteurs cibles ;
- une étape de modélisation du déphasage à l'ordre deux au cours du temps, dû à l'effet Doppler, de réflecteurs du type cible et de réflecteurs du type fort, la modélisation utilisant la signature cinématique de ces réflecteurs théoriques ;
- une étape de création d'un filtre pour au moins une distance et une vitesse radiale données à partir :
- du déphasage d'un réflecteur théorique de type cible à cette distance et pour cette vitesse radiale ; et
- du déphasage d'un réflecteur théorique de type fort à cette distance et pour chacune des vitesses radiales de la zone ;

ces déphasages étant obtenus à partir de la modélisation précitée, ce filtre étant conçu pour atténuer par projection l'énergie des réflecteurs de forte énergie de ladite scène et augmenter par corrélation l'énergie du ou des réflecteurs cibles de la scène à la distance et pour la vitesse radiale données ;

- une étape d'illumination de la scène et d'acquisition de données radar brutes à partir des échos réfléchis par les réflecteurs de la scène ;
- une étape d'obtention de profils distance obtenus par traitement des données radar brutes pour séparer les réflecteurs de la scène en distance, ces profils étant collectés pendant un temps suffisamment long pour que la variation en distance d'un réflecteur de la scène puisse être considérée comme quadratique par rapport au temps ;
- une étape d'application des filtres sur ces profils distance, cette étape conduisant à une séparation en vitesse des réflecteurs de la scène; et
- une étape de détection des réflecteurs cibles parmi les réflecteurs de forte énergie.

Corrélativement, l'invention concerne un dispositif pouvant être incorporé dans un système mobile pour détecter, dans une scène, au moins un réflecteur cible d'un premier type prédéterminé, dit type cible, susceptible d'être masqué par au moins un réflecteur de forte énergie d'un deuxième type, dit type fort, ce système mobile comportant :

- un radar apte à illuminer la scène et acquérir des données radar brutes à partir des échos réfléchis par des réflecteurs de la scène ;
- des moyens d'identification d'une zone de l'espace distance-vitesse radiale pouvant contenir des réflecteurs de forte énergie susceptibles de masquer les réflecteurs cibles ;
- des moyens de modélisation du déphasage à l'ordre deux au cours du temps, dû à l'effet Doppler, de réflecteurs du type cible et de réflecteurs du type fort, la modélisation utilisant la signature cinématique de ces réflecteurs théoriques ;
- des moyens de création d'un filtre pour au moins une distance et une vitesse radiale données à partir:
- du déphasage d'un réflecteur théorique de type cible à cette distance et pour cette vitesse radiale ; et
- du déphasage d'un réflecteur théorique de type fort à cette distance et pour chacune des vitesses radiales de la zone ;

ces déphasages étant obtenus à partir de la modélisation précitée,
le filtre étant conçu pour atténuer par projection l'énergie des réflecteurs de forte énergie de la scène et augmenter par corrélation l'énergie du ou des réflecteurs cibles de la scène à la distance et pour la vitesse radiale données ;

- des moyens d'obtention de profils distance obtenus par traitement des données radar brutes pour séparer les réflecteurs de la scène en distance, les profils étant collectés pendant un temps suffisamment long pour que la variation en distance d'un réflecteur de la scène puisse être considérée comme quadratique par rapport au temps ;
- des moyens d'application des filtres sur ces profils distance, cette étape conduisant à une séparation en vitesse des réflecteurs de la scène; et
- des moyens de détection des réflecteurs cibles parmi les réflecteurs de forte énergie.

Les définitions suivantes sont utilisées pour la présentation de l'invention :

**Temps long** : on appelle « temps long» un temps d'observation de la scène suffisamment long pour que la variation en distance d'une cible puisse être considérée comme quadratique (approximation à l'ordre deux) par rapport au temps. Pour un radar, le temps d'observation de la scène correspond au temps de collecte des échos.

Le déphasage doppler étant directement proportionnel à la variation de la distance, il est également quadratique ou autrement dit « d'ordre 2 ». Le terme linéaire de ce déphasage, appelé ordre 1, est fonction de la vitesse radiale de la cible, et le terme quadratique appelé ordre 2 est fonction de l'accélération radiale et la vitesse orthoradiale de la cible. Ce temps d'observation typiquement supérieur à la seconde dans cette invention n'est généralement pas utilisé par les radars de détection mais plutôt par les radars d'imagerie.

**Temps court** : on appelle « temps court » un temps d'observation de la scène telle que la variation en distance d'une cible puisse être considérée comme linéaire (approximation à l'ordre un) par rapport au temps.

Le déphasage doppler étant directement proportionnel à la variation de la distance, il est également linéaire ou autrement dit « d'ordre 1 ».

Les radars de détection font habituellement cette approximation et utilisent des temps d'observation typiques de l'ordre de quelques dizaines de millisecondes dans l'état de l'art.

**Vitesse radiale et vitesse orthoradiale** : conformément à l'état de l'art, on appelle vitesse radiale d'une cible, la projection sur l'axe reliant la cible au porteur, de la vitesse relative de la cible par rapport au porteur. On appelle vitesse orthoradiale la composante normale à la vitesse radiale, de la vitesse relative de la cible par rapport au porteur. Les vitesses vérifient l'équation suivante (fig 10) :

$$(\text{eq. } 1) \qquad \text{Vrel}^2 = \text{Vrad}^2 + \text{Vorth}^2$$

où Vrel est la vitesse relative de la cible par rapport au porteur.

**Signature cinématique** : On appelle signature cinématique, la relation qui relie la vitesse orthoradiale et la vitesse radiale d'une cible, ces vitesses étant relatives par rapport au système mobile. La signature cinématique correspond à un comportement cinématique particulier d'une cible par rapport au système.

**Réflecteur fixe au sol** : On appelle récepteur fixe au sol les réflecteurs dont la vitesse propre est nulle. De la plateforme, leur vitesse relative est égale à la vitesse de déplacement de la plateforme et de sens opposé. Par exemple sur la figure 9 les pylônes PYL2 et PYL3 possèdent, de la plateforme, une vitesse relative « -Va ».

La signature cinématique de ces réflecteurs vérifie l'équation:

$$(\text{eq. } 2) \qquad \text{Va}^2 = \text{Vrad}^2 + \text{Vorth}^2$$

où Va est la vitesse du porteur, qui peut être fournie, par exemple, par un GPS embarqué.

En particulier, le fouillis de sol est constitué d'une multitude de réflecteurs élémentaires fixes au sol possédant la signature cinématique donnée par l'équation (2).

**Réflecteur cible de collision** : On appelle réflecteur cible de collisions, les réflecteurs cibles dont la trajectoire va croiser celle du système. Elles possèdent une vitesse radiale dirigée vers le système et une vitesse orthoradiale nulle :

$$(\text{eq. } 3) \qquad \text{Vorth}^2 = 0$$

Le procédé et le dispositif de détection selon l'invention présentent l'avantage considérable de pouvoir être utilisé dans un système radar ne comportant qu'une seule antenne en émission, qu'une seule antenne en réception et une seule fréquence de répétition. Ceci permet d'obtenir un système de réjection de fouillis, notamment, de faibles cout et complexité par rapport aux systèmes de réjection de fouillis pour radars mobiles connus à ce jour.

La solution selon l'invention peut en particulier être utilisée pour détecter des cibles de collision masquées par du fouillis de sol.

Par conséquent, dans un mode particulier de réalisation, la signature cinématique des réflecteurs cibles est définie par une vitesse orthoradiale nulle.

De façon très avantageuse, la modélisation utilisée par l'invention notamment pour le fouillis, ne nécessite pas de données secondaires.

Par ailleurs, le traitement vitesse selon l'invention se fait sur une seule dimension en vitesse (définie par la signature cible), et ne nécessite pas d'itérations successives. Le traitement vitesse de l'art antérieur proposé par Wang, quant à lui, est un traitement itératif à deux dimensions beaucoup plus lourd en temps de calcul, auquel s'ajoute le besoin d'itération pour détecter les cibles de niveaux d'énergie plus faible.

Dans un mode particulier de réalisation, le filtre utilisé dans l'invention est une matrice de projection oblique connue de l'homme de l'art traitement de signal.

Cette caractéristique permet avantageusement d'effectuer la réjection des réflecteurs de forte énergie (par exemple du fouillis sol) et le traitement vitesse simultanément, là où l'art antérieur sépare le traitement en deux étapes.

Dans une première variante de réalisation, l'étape d'identification de zone de l'espace distance vitesse comporte:

- une étape de construction de la cartographie distance-vitesse radiale issues des données radar brutes observées pendant un temps court ; et
- une étape d'analyse de cette cartographie.

La construction de la cartographie distance-vitesse consiste classiquement à appliquer les traitements suivant: collecte des données radar brutes sur un « temps court », séparation des cibles en distance par une transformée de Fourier rapide appelée FFT distance, et séparation des cibles en vitesse radiale par un traitement appelé FFT Doppler.

L'analyse de la cartographie peut être effectuée de plusieurs façons.

Une première solution utilisant des traitements connus de l'homme de l'art de traitement d'images consiste à:

- former une image à partir de la cartographie, dont le choix de couleurs est basé sur les niveaux d'énergie de la cartographie, et dont le contraste est suffisant pour au moins différencier les zones de bruit sans réflecteurs et les zones de réflecteurs de forte énergie,
- appliquer des algorithmes de traitement d'images pour segmenter l'image en zones, par exemple par détection de contours, ou reconnaissance de formes lorsque l'on connaît la forme des zones des réflecteurs de forte énergie,
- classifier ces zones, selon des critères, étendue ou puissance totale par exemple, pour identifier les zones de réflecteurs de forte énergie susceptibles de masquer les cibles à détecter.

Une autre solution utilise des traitements connus de l'homme de l'art des radars et consiste à :

- effectuer une détection par seuillage des réflecteurs de forte énergie, par exemple en utilisant un algorithme de détection CFAR,
- regrouper les détections en « clusters » ou zones par algorithme de clustering, par exemple algorithme de plus proche voisin,
- classifier ces clusters selon des critères, étendue ou puissance totale du cluster par exemple, pour identifier les zones des réflecteurs de forte énergie susceptibles de masquer les cibles à détecter.

Dans une deuxième variante de réalisation de l'invention, l'étape d'identification de la zone dans l'espace distance vitesse est effectuée à partir d'une connaissance a priori de la géométrie d'observation, du diagramme d'antenne dudit radar et des caractéristiques du vol du système.

Dans un mode particulier de réalisation, l'étape d'obtention des profils distance comporte un traitement de compensation de la migration en distance des réflecteurs pendant le temps long.

Ce traitement permet de palier au fait que les réflecteurs peuvent changer de cases distance si leur déplacement par rapport au radar est supérieur à la taille d'une case distance.

Dans un mode particulier de réalisation, l'étape de détection utilise un détecteur de type CFAR.

En variante, l'étape de détection des réflecteurs cibles et l'estimation du niveau de bruit, pour une case distance vitesse radiale, utilisent uniquement lesdits profils distance collectés, à cette distance.

Dans un mode particulier de réalisation, les différentes étapes du procédé de détection selon l'invention sont déterminées par des instructions de programmes d'ordinateurs.

En conséquence, l'invention vise aussi un programme d'ordinateur sur un support d'informations, ce programme étant susceptible d'être mis en oeuvre par un calculateur, ce programme comportant des instructions adaptées à la mise en oeuvre des étapes d'un procédé de détection tel que mentionné ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un calculateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :

- la figure 1 représente sous forme d'organigramme, les principales étapes d'un procédé de détection conforme à un mode particulier de réalisation de l'invention ;
- la figure 2 représente sous forme d'organigramme une étape d'acquisition de données radar brutes pouvant être utilisée dans l'invention ;
- la figure 3 représente sous forme d'organigramme une étape d'obtention de profils distance pouvant être utilisée dans l'invention ;
- la figure 4 représente sous forme d'organigramme, un exemple d'une étape d'identification d'une zone de fouillis de sol conformément à un mode particulier de réalisation de l'invention ;
- la figure 5 représente sous forme d'organigramme une étape de modélisation pouvant être utilisée dans l'invention ;
- la figure 6 représente sous forme d'organigramme une étape d'application de filtres et de détection de cible pouvant être utilisée dans l'invention ;
- la figure 7 représente sous forme d'organigramme une étape de création de filtres pouvant être utilisée dans l'invention ;
- les figures 8, 9, 10 déjà décrites et les figures 11 et 19 représentent des exemples d'un radar dans des scènes, pour illustrer certains aspects de l'invention ;
- la figure 11 représente le système mobile et les paramètres géométriques permettant de calculer a priori les vitesses radiales de réflecteurs au sol situé à une distance d du système ;
- la figure 12 représente un système mobile comportant un dispositif conforme à un mode particulier de réalisation de l'invention ;
- les figures 13 et 14 représentent le résultat d'un traitement vitesse obtenus respectivement selon l'état de la technique et par application des filtres de la figure 6;
- les figures 15a et 15b déjà décrites représentent les réflecteurs de la scène de la figure 8 respectivement sur un profil en distance et sur une cartographie distance-vitesse ;
- la figure 16 déjà décrite représente, dans une cartographie distance-vitesse radiale, les réflecteurs d'une scène comportant une cible dans une zone de forte énergie;
- la figure 17 représente, dans l'espace distance vitesse radiale, des réflecteurs et des zones de forte énergie ; et
- la figure 18 représente, sous certaines hypothèses, la position de la zone de forte énergie correspondant au fouillis de sol dans l'espace distance vitesse radiale.

Description détaillée de modes de réalisation de l'invention

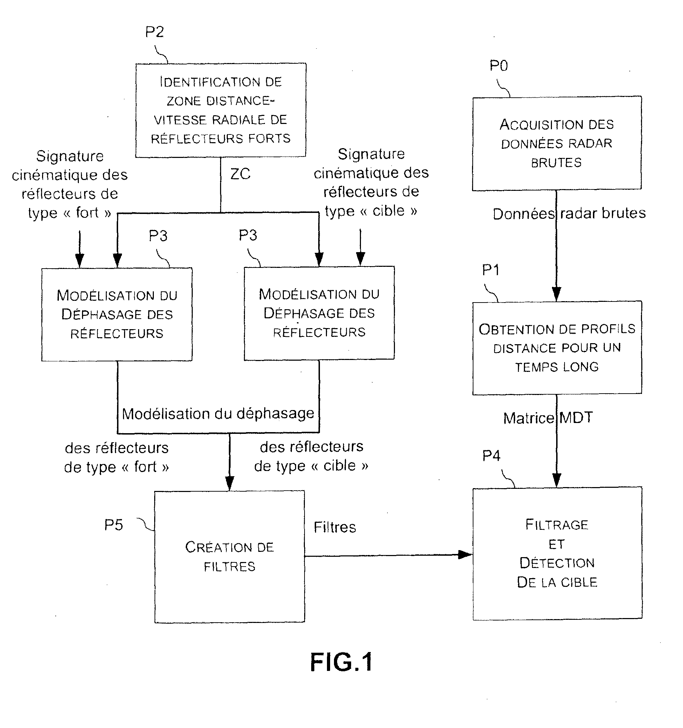

Nous allons maintenant décrire, en référence aux figures 1 à 19, un procédé et un dispositif permettant de détecter dans une scène, des réflecteurs cibles de types prédéterminés susceptibles d'être masqués par des réflecteurs de forte énergie.

D'une façon générale, ce procédé et ce dispositif appliquent, sur des données acquises par radar, des filtres qui peuvent être créés, soit à partir de ces données elles-mêmes (première variante), soit a priori, sans utilisation du radar, à partir d'une connaissance générale de la scène et de caractéristiques du radar et de conditions de vol (deuxième variante).

L'invention sera principalement décrite dans cette seconde variante de réalisation.

Le procédé selon l'invention met en oeuvre six étapes principales illustrées en figure 1, à savoir :

- une étape P0 d'acquisition de données radar brutes ;
- une étape P1 d'obtention de profils distance pour un temps long ;
- une étape P2 d'identification de zones de forte énergie ;

- une étape P3 de modélisation des réflecteurs de la scène ; et
- une étape P5 de création de filtres en vue d'un temps long ;
- une étape P4 d'application de ces filtres et de détection de cibles.

Il apparaît sur cette figure que les étapes P2 d'identification de zones, P3 de modélisation et P5 de création des filtres peuvent être effectuées, avant, après ou en parallèle des étapes P0 d'acquisition de données radar brutes et P1 d'obtention des profils distance.

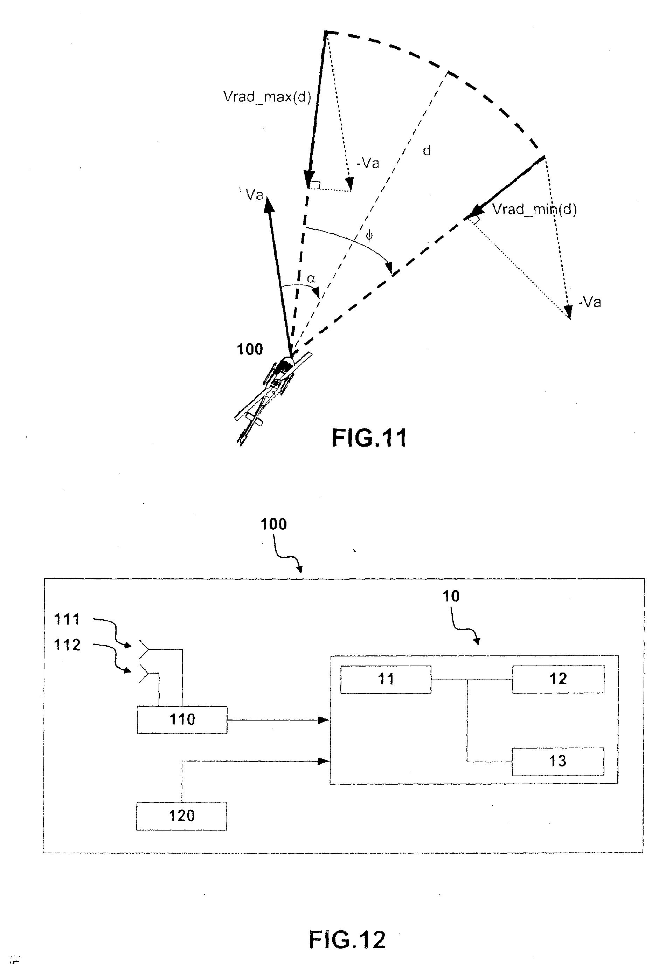

La figure 12 représente de façon schématique un système mobile 100 comportant un radar 110 et un dispositif 10 conforme à l'invention.

Dans le mode de réalisation décrit ici, le radar 110 de portée Dmax comporte un angle d'ouverture en azimut noté $\phi$. Il utilise une forme d'onde du type FMCW de longueur d'onde centrale lambda et de bande de fréquences B. Il comporte une seule antenne 111 en émission et une seule antenne 112 en réception et effectue une démodulation homodyne connue de l'homme de l'art.

Dans l'exemple de réalisation décrit ici, le dispositif 10 a l'architecture matérielle d'un calculateur. Il comporte notamment une unité de calcul 11, une mémoire vive de type RAM 12 et une mémoire morte de type ROM 13.

Cette mémoire morte 13 constitue un support au sens de l'invention. Elle comporte un programme d'ordinateur PG, qui, lorsqu'il est exécuté par l'unité de calcul 11, exécute des instructions pour mettre en oeuvre les étapes du procédé de la figure 1.

Dans le mode de réalisation décrit ici, le dispositif 10 comporte des moyens 120 d'obtention de la vitesse Va, de l'altitude et l'attitude du système mobile 100, par exemple par GPS et la centrale inertielle de la plate-forme mobile.

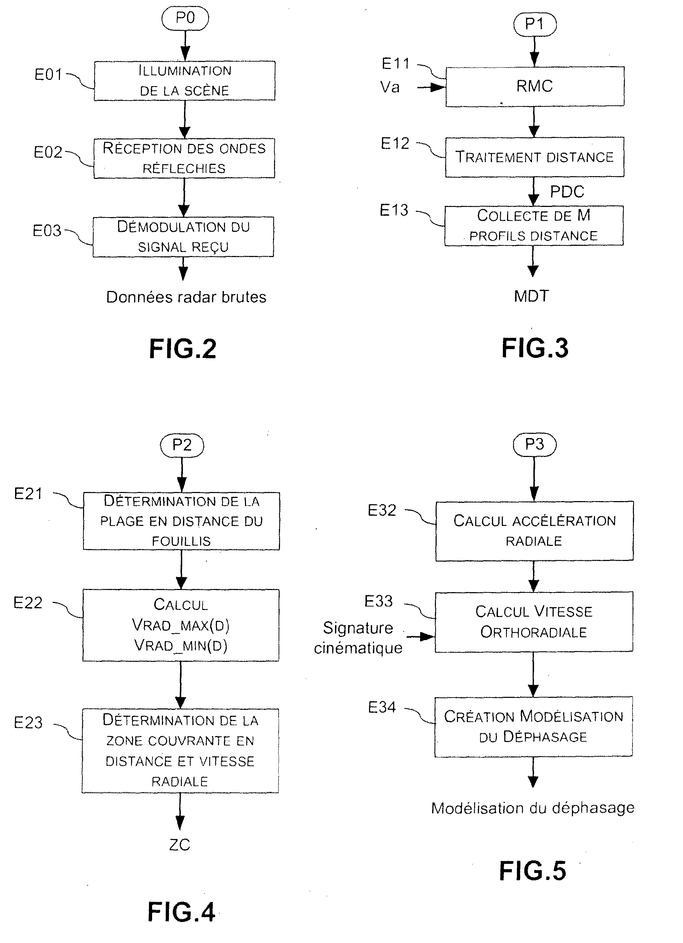

En référence aux figures 2, 12 et 19, nous allons décrire un exemple de réalisation de l'étape P0 d'acquisition de données radar brutes.

Dans le mode de réalisation décrit ici, le radar 110 émet une onde 70 de forme FMCW qui se propage dans la scène (étape E01). Dans ce mode de réalisation, l'onde est émise par l'antenne d'émission unique 111.

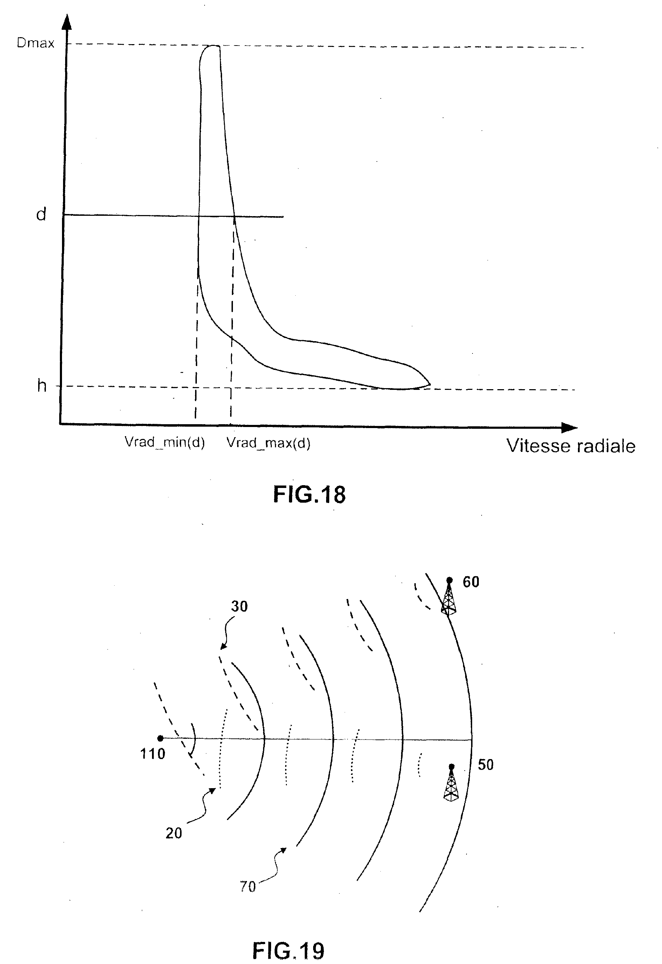

La forme d'onde émise est répétée par cycle de Tr secondes. Cette onde est rétrodiffusée par chaque réflecteur de la scène sous forme d'échos de l'onde. Seuls deux réflecteurs 50, 60 et leurs échos 20, 30 sont représentés à la figure 19. Ces échos sont ensuite reçus par l'unique antenne de réception 112, distincte de l'antenne d'émission 111 (étape E02).

Les signaux reçus sont démodulés, échantillonnés et quantifiés (étape E03) pour former des données radar brutes.

En référence à la figure 3, nous allons décrire un exemple d'une étape P1 d'obtention de profils distance conforme à l'invention.

De façon remarquable, la collecte des profils distance est effectuée pendant un temps long, au sens de l'invention.

Plus précisément, dans cet exemple, cette étape P1 comporte les trois sous-étapes suivantes :

- compensation de migration en distance (étape E11) ;
- traitement en distance (étape E12) ; et
- collecte des profils distance (étape E13).

Plus précisément, à chaque cycle de répétition Tr du radar, on sépare (étape E12) les réflecteurs en distance, conformément à l'état de l'art, par exemple par une transformée de Fourier, pour obtenir un vecteur profil distance PDC contenant des cases distance. La taille des cases distance correspond à la résolution en distance du radar c/2B, connue de l'homme de l'art, et contient une information d'énergie et de phase, qui est la somme des contributions de tous les réflecteurs situés à la distance considérée.

Durant le temps long utilisé par le dispositif 10, les réflecteurs peuvent changer de cases distance si leur déplacement par rapport au radar 110 est supérieur à la taille d'une case distance.

Dans ce mode de réalisation, le dispositif 10 selon l'invention met en place (étape E11) un traitement RMC de compensation de changement de case distance des réflecteurs, changement dû au déplacement de la plateforme mobile, pendant le temps long.

Le traitement RMC en soi est connu de l'homme de l'art et ne sera pas décrit ici. Il utilise la vitesse Va du système mobile 110, fournie par les moyens 120 précédemment décrits.

Dans l'exemple de réalisation décrit ici, le dispositif 10 collecte les profils distance à chaque cycle durant un temps long (étape E13), et forme une matrice Distance-Temps notée MDT de M colonnes. Dans cette matrice MDT :

- une colonne est un des vecteurs profils distance PDC calculé à l'étape E12 ; et
- une ligne correspond à l'observation au cours du temps de l'énergie et de la phase d'une même case distance d, et sera appelée signal temporel MDT(d) par la suite. Le signal temporel MDT(d) représente la somme des signaux issus des échos de tous les réflecteurs situés dans la case distance d.

Le choix du nombre M de cycles radar définit le temps long de l'invention ; conformément à l'invention il est suffisamment grand pour que la variation en distance des réflecteurs puisse être considérée comme quadratique par rapport au temps :

$$(eq.4) \quad d(t) = d0 + Vrad \times t + 1/2\,(Arad + Vorth^2/d0) \times t^2$$

Dans cette équation :

- d(t) représente la distance d'un réflecteur au temps t ;
- d0 représente la distance de ce réflecteur au temps initial t=0 ;
- Vrad représente la vitesse radiale de ce réflecteur ;
- Arad représente l'accélération radiale de ce réflecteur ; et
- Vorth représente la vitesse orthoradiale de ce réflecteur,

Vrad, Arad et Vorth étant considérés constants pendant le temps d'observation long.
De ce fait, le déphasage dû à l'effet Doppler traduisant la variation en distance d'un réflecteur par rapport au système mobile 100 est quadratique par rapport au temps.
Ce déphasage à l'ordre 2 s'écrit de manière classique :

$$(eq.\ 5) \quad 2pi/lambda \times (Vrad \times t + 1/2\,(Arad + Vorth^2/d0) \times t^2),$$

dans laquelle lambda représente la longueur d'onde centrale émise par le radar 110.
On appellera « loi de phase d'un réflecteur » l'exponentielle complexe de son déphasage au cours du temps défini par l'équation (5) :

$$exp[j2pi/lambda \times (Vrad \times t + 1/2\,(Arad + Vorth^2/d0) \times t^2)]$$

D'une façon générale, l'étape P2 identifie dans l'espace distance vitesse radiale connu de l'homme du métier des radars, une ou des zones dans lesquelles se situent des réflecteurs de forte énergie susceptibles de masquer des réflecteurs cibles à détecter.

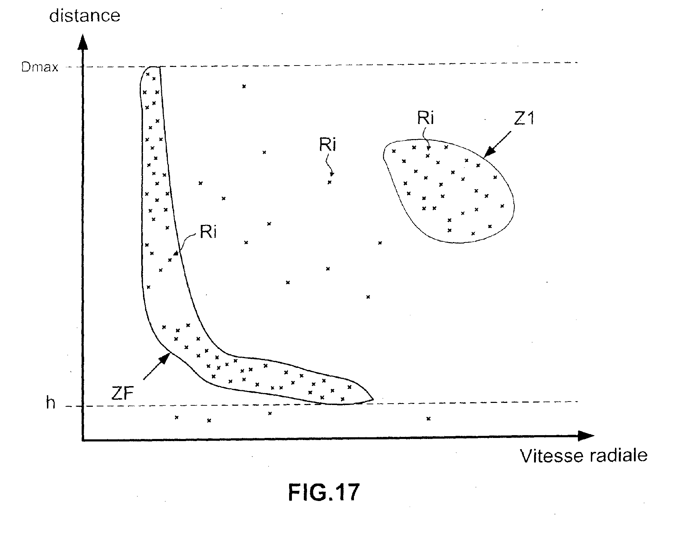

La figure 17 présente un exemple d'espace distance vitesse radiale dans lequel :

- les points Ri, représentés par des croix, désignent des réflecteurs de la scène ; et
- deux zones Z1 et ZF désignent des zones de forte énergie, la zone ZF en forme de J représentant la zone de fouillis de sol.

Dans le mode de réalisation décrit ici, le procédé et le dispositif de détection selon l'invention identifient la zone ZF de forte énergie correspondant au fouillis de sol, les réflecteurs cibles à détecter n'étant recherchés que dans cette zone.
On rappelle que l'invention est ici décrite dans sa seconde variante et plus précisément dans un mode de réalisation dans lequel on fait les hypothèses de sol plat et de vol stabilisé horizontal, ces hypothèses permettant de déduire a priori et géométriquement la zone de fouillis à l'aide de la vitesse, de la hauteur du système mobile 100 par rapport au sol, ainsi que de la zone angulaire d'observation de la scène.
Dans ce mode de réalisation, et comme représenté à la figure 4, l'étape P2 d'identification de la zone de fouillis comporte les trois sous-étapes suivantes :

- détermination de la plage distance de fouillis de sol (étape E21) ;
- calcul des vitesses radiales du fouillis de sol à ces distances (étape E22) ; et
- détermination d'une zone couvrant la zone de fouillis (étape E23).

En référence à la figure 18, et sous l'hypothèse précédentes de vol horizontal, on détermine la plage de distance dans laquelle se situe le fouillis de sol (étape E21), cette plage étant bornée, d'une part par la hauteur h du système mobile 100 par rapport au sol, et d'autre part, par la portée Dmax du radar 110.

Pour une distance d donnée, le dispositif 10 selon l'invention calcule, au cours d'une étape E22, la plage [Vrad_min(d), Vrad_max(d)] de vitesses radiales correspondant au fouillis de sol, en utilisant les relations géométriques suivantes:

- lorsque $|\alpha| > \phi/2$ :

$$(eq.6\text{-}7) \qquad Vrad\_\max(d) = Va\sqrt{1 - \left(\frac{h}{d}\right)^2}\cos(\alpha - \phi/2)$$

$$Vrad\_\min(d) = Va\sqrt{1 - \left(\frac{h}{d}\right)^2}\cos(\alpha + \phi/2)$$

- lorsque $|\alpha| > \phi/2$ :

$$(eq.6\text{-}7) \qquad Vrad\_\max(d) = Va\sqrt{1 - \left(\frac{h}{d}\right)^2}$$

$$Vrad\_\min(d) = Va\sqrt{1 - \left(\frac{h}{d}\right)^2}\cos(\alpha + \phi/2)$$

dans lesquelles :
- Va est la vitesse du système mobile 100 ;
- h sa hauteur par rapport au sol ;
- d est la distance d'observation du sol ;
- $\phi$ est l'angle d'ouverture du radar en azimut ;
- $\alpha$ est l'angle entre la direction de déplacement du système mobile et l'axe de visée du radar ;

comme représenté à la figure 11.

Comme illustré à la figure 18, la zone de fouillis de sol a la forme caractéristique d'un crochet en J dans l'espace distance-vitesse radiale, appelée « J-hook » en anglais.

Dans le mode de réalisation décrit ici, le procédé de détection selon l'invention utilise, pour la suite du traitement, une zone ZC correspondant à la zone de fouillis ZF.

En variante, on peut déterminer (au cours d'une étape E23), une zone ZC couvrant la zone de fouillis ZF.

D'une façon générale, au cours d'une étape P3, on modélise le déphasage à l'ordre deux, dû à l'effet Doppler des réflecteurs de la scène.

Pour cela, on utilise la loi de phase donnée par l'équation (5), vérifiée pour tous les réflecteurs, et leurs signatures cinématiques pour obtenir un déphasage modélisé dépendant uniquement de la vitesse radiale et de la distance. Cette étape P3, comme représentée à la figure 1, est réalisée d'une part pour modéliser le déphasage des réflecteurs de type fort et d'autre part pour modéliser le déphasage des réflecteurs de type cible.

Plus précisément, dans cet exemple, et comme représenté à la figure 5, l'étape P3 comporte les sous-étapes suivantes :

- Calcul de l'accélération radiale Arad (E32) ;
- Calcul de la vitesse orthoradiale Vorth(d) (E33) ; et
- Création de la modélisation du déphasage du réflecteur (E34)

Au cours de l'étape E32 le dispositif 10 calcule l'accélération radiale des réflecteurs. Dans l'exemple de réalisation décrit ici, le dispositif 10 fait l'hypothèse d'un vol stabilisé horizontal et de réflecteurs fixes au sol (réflecteurs de type fort au sens de l'invention). L'accélération radiale Arad des réflecteurs de type fort est donc nulle. Dans l'exemple de réalisation décrit ici, on s'intéresse à la détection de cibles de collision (réflecteurs de type cible au sens de l'invention). L'accélération radiale Arad des réflecteurs de type cible est donc également nulle.

Au cours de l'étape E33 le dispositif 10 calcule la vitesse orthoradiale des réflecteurs. Celle-ci s'obtient à partir de la signature cinématique du récepteur qui relie la vitesse radiale Vrad et la vitesse orthoradiale Vorth.

Dans l'exemple de réalisation décrit ici, la signature cinématique des réflecteurs de type fort est prédéterminée. Cette signature est la signature cinématique du fouillis donnée par l'équation (2).

En variante, elle pourrait être obtenue en cours de vol, par exemple choisie par le pilote dans une base de données de signatures cinématiques en fonction de la scène.

Conformément à l'invention, la signature cinématique des réflecteurs de type cible est prédéterminée. Dans l'exemple des cibles de collision, on utilise la signature cinématique de l'équation (3).

Au cours de l'étape E34 le dispositif 10 modélise le déphasage des réflecteurs théoriques. Pour cela on utilise le déphasage à l'ordre deux exprimé par l'équation (5) rappelée ci-dessous.

$$(eq.\ 5) \qquad 2pi/lambda \times (Vrad \times t + 1/2\ (Arad + Vorth^2/d0) \times t^2),$$

dans laquelle on renseigne les valeurs de Arad calculées à l'étape E32 et dans laquelle on remplace Vorth par sa relation à Vrad obtenue à l'étape E33.

Conformément à l'invention, on utilise deux types de signatures cinématiques, qui définissent deux types de réflecteurs théoriques, à savoir des réflecteurs théoriques de type « fort » et des réflecteurs théoriques de type « cible », conduisant à deux modélisations.

D'une façon générale, au cours d'une étape P5, on crée un filtre pour une distance et une vitesse radiale données. Ce filtre est calculé :

- à partir du déphasage d'un réflecteur théorique de type cible à cette distance et pour cette vitesse radiale ; et
- à partir du déphasage d'un réflecteur de type fort pour cette distance et pour chacune des vitesses radiales de la zone ZC.

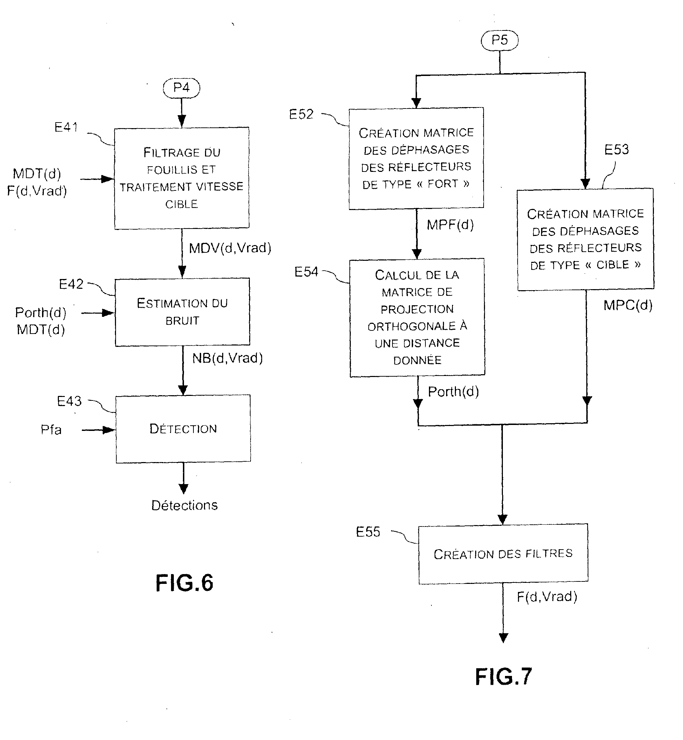

Plus précisément, dans ce mode de réalisation, l'étape P5 comporte, en référence à la figure 7 :

- une sous-étape de création d'une matrice des déphasages des réflecteurs de type fort (étape E52) ;
- une sous-étape de création d'une matrice des déphasages des réflecteurs de type cible (étape E53) ;
- une sous-étape de calcul de matrice de projection orthogonale à une distance donnée (étape E54) ; et
- une sous-étape de création d'un filtre pour une distance et une vitesse radiale données (étape E55).

A l'étape E52, on calcule le déphasage d'un réflecteur théorique de type fort à la distance pour laquelle le filtre est créé et pour chacune des vitesses radiales de la zone ZC, ce déphasage étant obtenu à partir de la modélisation de l'étape P3.

De même, à l'étape E53, on calcule le déphasage d'un réflecteur théorique de type cible à la distance et pour la vitesse radiale pour lesquelles le filtre est créé, ce déphasage étant obtenu à partir de la modélisation de l'étape P3.

Pour cette distance d donnée, on stocke ces déphasages dans une première matrice des déphasages MPF(d) (respectivement seconde matrice des déphasages MPC(d)), ces déphasages étant calculés aux temps k.Tr et aux vitesses Vrad(d) (respectivement à la vitesse Vrad pour laquelle le filtre est créé).

Dans cette matrice, l'indice k varie en ligne et les vitesses radiales Vrad varient en colonne. Les éléments de cette matrice sont les déphasages des réflecteurs théoriques et s'écrivent, dans cet exemple de réalisation :

$$(eq.\ 6): \qquad \exp\left( j2\pi \left( \frac{2Vrad(d)}{\lambda} kT_r + \frac{Vorth^2(d)}{\lambda d} k^2 T_r^2 \right) \right)$$

équation dans laquelle :

- k est un entier variant de 0 à M-1 ;
- la vitesse Vrad(d) est égale, pour MPC(d), à la vitesse pour laquelle le filtre est créé; et
- la vitesse Vrad(d) varie, pour MPF(d), de Vrad_min(d) à Vrad_max(d), suivant le pas en vitesse $\Delta v = \lambda/2MT_r$ où $\Delta v$ est la résolution en vitesse du radar 110, connue de l'homme du métier ; et
- Vorth(d) est obtenue à partir de Vrad(d) à l'aide de la signature cinématique des réflecteurs théoriques comme décrit à l'étape P3. Pour la première matrice MPF(d), on utilise la signature cinématique des réflecteurs de type fort (équation (2)); pour la deuxième matrice MPC(d), on utilise la signature cinématique des réflecteurs de type cible (équation (3)).

Ainsi, une colonne de MPF(d) (respectivement MPC(d)) modélise le déphasage au cours du temps d'un réflecteur de type fort (respectivement de type cible) à la distance d et à la vitesse radiale Vrad. Une ligne de MPF(d) (respectivement MPC(d)) modélise le déphasage à un instant donné des réflecteurs de type fort (respectivement de type cible) à la distance d.

La matrice MPF(d) (respectivement MPC(d)) représente le sous-espace bruit (respectivement sous-espace signal) des réflecteurs de type fort (respectivement de type cible) et d'amplitudes constantes au cours du temps.

Ces deux sous-espaces sont distincts puisque les signatures cinématiques des réflecteurs de type fort et de type cible sont différentes.

Le filtre créé lors de cette étape P5 utilise une projection par rapport au sous-espace bruit.

Dans une première variante, cette projection est une projection orthogonale apte à atténuer l'énergie des réflecteurs de type fort. Elle nécessite le calcul de la matrice de projection orthogonale par rapport au sous-espace bruit.

Dans une seconde variante, cette projection est une projection oblique apte à atténuer l'énergie des réflecteurs de type fort et augmenter l'énergie des réflecteurs de type cible. Elle nécessite également le calcul de la matrice de projection orthogonale par rapport au sous-espace bruit.

Au cours d'une étape E54, le dispositif 10 calcule cette matrice de projection orthogonale par rapport au sous-espace bruit.

Il est connu de l'homme de l'art des mathématiques que cette matrice de projection orthogonale, notée Porth(d), se calcule à partir de la matrice MPF(d) qui représente le sous-espace bruit. Elle s'écrit sous la forme (eq. 8) :

$$Porth(d) = I - MPF(d).\left(MPF(d)^*.MPF(d)\right)^{-1}.MPF(d)^*$$

où I est la matrice identité et l'opérateur * désigne l'opération de transconjugaison d'une matrice. Par définition, Porth(d). MPF(d) = 0.

Au cours d'une étape E55, le dispositif 10 crée un filtre F(d, Vrad) pour une distance et une vitesse radiale données à partir de Porth(d). Deux variantes peuvent être envisagées

Dans la première variante, le filtre créé au cours de cette étape E55 est une projection orthogonale, suivie d'une corrélation.

Cette projection orthogonale revient à multiplier le signal temporel MDT(d) avec la matrice de projection orthogonale Porth(d) :

$$Porth(d). MDT(d)^T$$

équation dans laquelle l'opérateur $^T$ désigne l'opération de transposition d'une matrice.

La corrélation qui suit la projection dans cette première variante se fait par rapport au sous-espace signal défini par la matrice MPC(d), et revient à multiplier le signal en sortie de projection par la colonne de MPC(d) correspondant à la vitesse radiale Vrad et notée MPC(d,Vrad):

$$MPC(d, Vrad)^*.Porth(d). MDT(d)^T$$

On définit alors le filtre F(d, Vrad) de la manière suivante (eq.9):

$$F(d,Vrad) = Porth(d).MPC(d,Vrad).MPC(d,Vrad)^*.Porth(d)$$

Dans cette première variante, le filtre applique donc successivement une projection orthogonale pour atténuer l'énergie des réflecteurs de type fort, et une corrélation pour augmenter l'énergie des réflecteurs de type cibles.

De plus, cette corrélation revient à effectuer un traitement vitesse adapté à la signature cinématique des réflecteurs de type cible. Dans ce mode de réalisation, les réflecteurs de type cible sont des cibles de collision et ont un déphasage quadratique nul : le traitement vitesse adapté est par exemple une transformée de Fourier discrète.

Dans la deuxième variante, le filtre créé au cours de cette étape E55 est une projection oblique.

En effet, dans la pratique, les deux sous-espaces signal et bruit définis dans l'invention ne sont pas orthogonaux : la projection orthogonale a pour effet de supprimer une partie du sous-espace signal.

L'utilisation d'une projection oblique, mieux adaptée aux deux sous-espaces en présence, permet d'éviter cet effet néfaste.

Cette projection oblique utilise la matrice de projection orthogonale au sous-espace bruit Porth(d), et la matrice MPC(d) représentant le sous-espace signal. Il est connu de l'homme de l'art des mathématiques que la matrice de projection oblique est alors obtenue à partir l'équation suivante (eq. 10) :

$$F(d,Vrad) = Porth(d).p.\left(p^*.Porth(d).p\right)^{-1}.p^*.Porth(d)$$

dans laquelle p désigne la colonne de MPC(d) à la vitesse Vrad.

Cette projection oblique permet simultanément d'atténuer l'énergie des réflecteurs de type fort et augmenter l'énergie des réflecteurs de type cible. Elle effectue de plus un traitement vitesse adapté à la signature cinématique des réflecteurs de type cible.

On recherche les réflecteurs cibles à détecter dans une zone de traitement ZT choisie dans l'espace distance vitesse radiale. D'une façon générale, au cours d'une étape P4, on applique sur les signaux temporels obtenus à l'étape P1, les filtres obtenus à l'étape P5, pour les distances et vitesses radiales de la zone de traitement ZT puis on effectue une étape de détection des réflecteurs cibles de la scène.

Plus précisément, l'étape P4 comporte, en référence à la figure 6 :

- une sous-étape d'application des filtres (étape E41) ;
- une sous-étape d'estimation du bruit (étape E42) ; et
- une sous-étape de détection des réflecteurs cibles (étape E43).

Au cours d'une étape E41 le dispositif 10 applique sur les signaux temporels MDT(d), pour chaque distance d et vitesse radiale de la zone ZT, les filtres F(d,Vrad) afin d'obtenir la matrice distance vitesse MDV (eq. 11) :

$$MDV(d,Vrad) = \left| MDT(d)^{T*} \times F(d,Vrad) \times MDT(d)^{T} \right|$$

équation dans laquelle les opérateurs $^T$ et $^*$ désignent les opérations de transposition et de transconjugaison d'une matrice.

L'application de ces filtres réalise simultanément la suppression des réflecteurs issus du fouillis, le renforcement de l'éventuelle cible masquée et réalise le traitement vitesse connu de l'homme de l'art des radars. Ce traitement vitesse permet de former une cartographie distance-vitesse radiale de la zone de traitement ZT.

La valeur MDV(d,Vrad) est une estimation, au sens traitement du signal, de l'énergie restante après suppression de fouillis, dans la case distance vitesse d, Vrad. Par conséquent :

- si une cible est présente sur cette case, MDV(d,Vrad) mesure l'énergie de cette cible ;
- sinon, MDV(d,Vrad) est une mesure de bruit dans cette case.

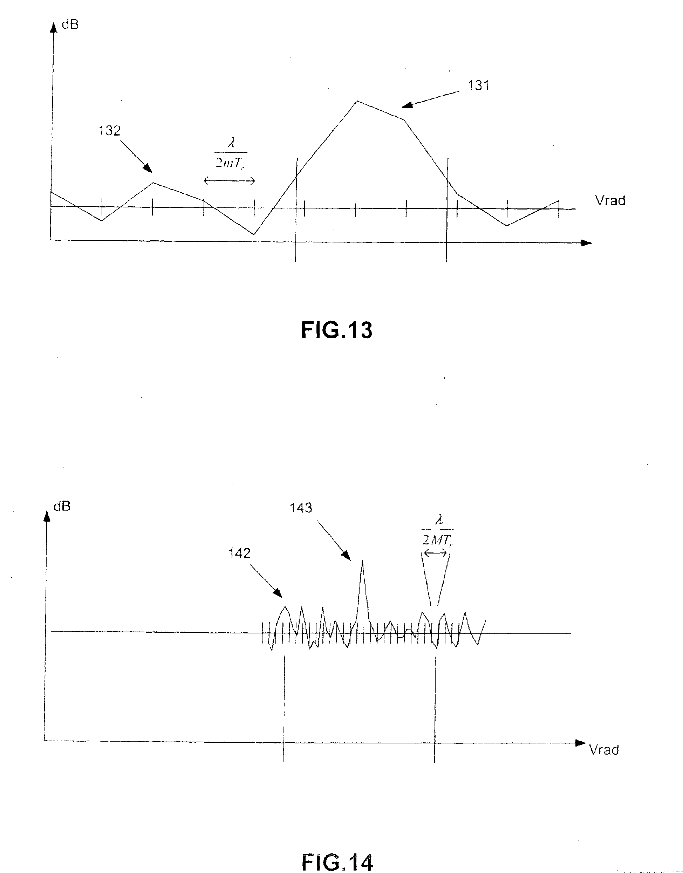

La figure 14 illustre l'effet de ce filtrage « temps long » pour une distance d par rapport à un traitement vitesse par FFT sur « temps court » illustré figure 13 tel qu'utilisé dans l'état de l'art. Dans ces deux figures, le bruit est représenté par deux zones 132 et 142. Le fouillis 131 apparaissant dans la figure 13 est supprimé dans la figure 14 et une cible masquée 143 apparaît alors, entourée du bruit 142.

La résolution en vitesse radiale utilisée dans l'invention (figure 14) est bien plus petite que pour le traitement vitesse classique en « temps court » (m.Tr, figure 13), du fait de la différence de temps.

L'étape E42 est une étape d'estimation du bruit pour chaque case distance vitesse radiale de la zone de traitement ZT.

Dans une première variante, ce niveau de bruit est estimé par un procédé de projection oblique identique à celui utilisé pour la création des filtres à l'étape P5 (eq. 12):

$$NB(d,Vrad) = \left| MDT^{T*}(d).Porth(d).MDT(d)^T - MDV(d,Vrad) \right|$$

Cette estimation du niveau de bruit pour une distance vitesse radiale donnée, utilise uniquement les profils distance collectés MDT(d), à cette distance.

Au cours d'une étape E43, le dispositif 10 selon l'invention calcule le rapport d'énergie signal à bruit RSB sur la case distance-vitesse radiale d, Vrad.

$$(eq.\ 13): \qquad RSB(d,Vrad) = \frac{MDV(d,Vrad)}{NB(d,Vrad)}$$

Au cours de la même étape E43, le dispositif 10 effectue la détection au sens du traitement du signal en comparant ce rapport RSB à un seuil, une cible étant détectée lorsque le rapport RSB dépasse ce seuil.

Le seuil de détection est fixé à partir de la probabilité de fausse alarme voulue par le système et le nombre de réflecteurs de type fort à supprimer par case distance. Ce détecteur est appelé « zero-forcing matched subspace detector », connu de l'homme de l'art du traitement du signal. Il est adapté à l'utilisation des filtres de projection oblique tels qu'utilisé dans cette variante.

Dans une seconde variante, les étapes E42 d'estimation du niveau de bruit et l'étape E43 de détection sont faites conformément à l'état de l'art en utilisant un détecteur CFAR.

En particulier ce détecteur peut être appliqué lorsque le filtre créé à P5 est une projection orthogonale, suivie d'une corrélation.

**Revendications**

1. Procédé mis en oeuvre dans un système mobile comportant un radar pour détecter, dans une scène, au moins un réflecteur cible d'un premier type prédéterminé, dit type cible, susceptible d'être masqué par au moins un réflecteur de forte énergie d'un deuxième type, dit type fort,
ce procédé comportant :

   - une étape (P2) d'identification d'une zone (ZC) de l'espace distance-vitesse radiale pouvant contenir des réflecteurs de forte énergie susceptibles de masquer lesdits réflecteurs cibles ;

   ledit procédé étant **caractérisé en ce qu'**il comporte :

   - une étape (P3) de modélisation du déphasage à l'ordre deux au cours du temps, dû à l'effet Doppler, de réflecteurs théoriques dudit type cible et de réflecteurs théoriques dudit type fort, ledit déphasage, fonction de l'accélération radiale et de la vitesse orthoradiale desdits réflecteurs théoriques, traduisant la variation en distance desdits réflecteurs théoriques par rapport audit système mobile, la modélisation utilisant la signature cinématique desdits réflecteurs théoriques, la signature cinématique d'un réflecteur théorique reliant la vitesse orthoradiale et la vitesse radiale de ce réflecteur théorique ;
   - une étape (P5) de création d'un filtre pour au moins une distance et une vitesse radiale données à partir:

      - du déphasage d'un réflecteur théorique de type cible (MPC) à cette distance et pour cette vitesse radiale ; et
      - du déphasage d'un réflecteur théorique de type fort (MPF) à cette distance et pour chacune des vitesses radiales de ladite zone (ZC) ;

ces déphasages étant obtenus à partir de ladite modélisation,
ledit filtre étant conçu pour atténuer par projection l'énergie des réflecteurs de forte énergie de ladite scène et augmenter par corrélation l'énergie dudit au moins un réflecteur cible de ladite scène à ladite au moins une distance et vitesse radiale données ;

- une étape (P0) d'illumination de la scène et d'acquisition de données radar brutes à partir des échos réfléchis par les réflecteurs de ladite scène ;
- une étape (P1) d'obtention de profils distance obtenus par traitement desdites données radar brutes pour séparer les réflecteurs de ladite scène en distance, lesdits profils étant collectés (MDT) pendant un temps suffisamment long pour que la variation en distance d'un réflecteur de ladite scène puisse être considérée comme quadratique par rapport au temps ;
- une étape (P4) d'application des filtres sur lesdits profils distance, cette étape conduisant à une séparation en vitesse desdits réflecteurs de la scène;
- une étape de détection dudit au moins un réflecteur cible parmi lesdits réflecteurs de forte énergie.

2. Procédé selon la revendication 1 **caractérisé en ce que** ledit filtre est un projecteur oblique.

3. Procédé selon la revendication 1 ou 2 **caractérisé en ce que** ladite étape d'identification (P2) comporte:

- une étape de construction de la cartographie distance-vitesse radiale issues desdites données radar brutes observées pendant un temps court ; et
- une étape d'analyse de cette cartographie.

4. Procédé selon la revendication 1 ou 2 **caractérisé en ce que** ladite étape d'identification (P2) de zone (ZC) est effectuée à partir d'une connaissance a priori de la géométrie d'observation, du diagramme d'antenne dudit radar et des caractéristiques du vol dudit système.

5. Procédé selon l'une quelconque des revendications 1 à 4, **caractérisé en ce que** ladite étape (P1) d'obtention de profils distance comporte un traitement (E11) de compensation de la migration en distance des réflecteurs pendant ledit temps long.

6. Procédé selon l'une quelconque des revendications 1 à 5, **caractérisé en ce que** ladite étape de détection utilise un détecteur de type CFAR.

7. Procédé selon l'une quelconque des revendications 1 à 5, **caractérisé en ce que** ladite étape de détection d'un réflecteur cible et l'estimation du niveau de bruit, pour une case distance vitesse radiale, utilisent uniquement lesdits profils distance collectés (MDT), à ladite distance.

8. Procédé selon l'une quelconque des revendications 1 à 7, **caractérisé en ce que** ladite étape d'illumination de la scène utilise une forme d'onde du type FMCW.

9. Procédé selon l'une quelconque des revendications 1 à 8, **caractérisé en ce que** ladite signature cinématique desdits réflecteurs cibles est définie par une vitesse orthoradiale nulle.

10. Procédé de détection selon l'une quelconque des revendications 1 à 9, **caractérisé en ce que** lesdites étapes (P2) d'identification de zones et (P3) de création des filtres peuvent être effectuées, avant, après ou en parallèle desdites étapes (P0) d'acquisition de données radar brutes et (P1) d'obtention des profils distance.

11. Programme d'ordinateur (PG) comportant des instructions pour l'exécution des étapes du procédé de détection selon l'une quelconque des revendications 1 à 10 lorsque ledit programme est exécuté par un calculateur (AS).

12. Support d'enregistrement (13) lisible par un calculateur sur lequel est enregistré un programme d'ordinateur comprenant des instructions pour l'exécution des étapes du procédé de détection selon l'une quelconque des revendications 1 à 10.

13. Dispositif (10) pouvant être incorporé dans un système mobile (100) pour détecter, dans une scène, au moins un réflecteur cible d'un premier type prédéterminé, dit type cible, susceptible d'être masqué par au moins un réflecteur de forte énergie d'un deuxième type, dit type fort, ce système mobile comportant :

- un radar (110) apte à illuminer ladite scène et acquérir des données radar brutes à partir des échos réfléchis par des réflecteurs de ladite scène ;
- des moyens (11, 12, 13) d'identification d'une zone (ZC) de l'espace distance-vitesse radiale pouvant contenir des réflecteurs de forte énergie susceptibles de masquer lesdits réflecteurs cibles ;
ledit dispositif étant **caractérisé en ce qu'**il comporte :
- des moyens (11, 12, 13) de modélisation du déphasage à l'ordre deux au cours du temps, dû à l'effet Doppler, de réflecteurs théoriques dudit type cible et de réflecteurs dudit type fort, ledit déphasage, fonction de l'accélération radiale et de la vitesse orthoradiale desdits réflecteurs théoriques, traduisant la variation en distance desdits réflecteurs théoriques par rapport audit système mobile, la modélisation utilisant la signature cinématique desdits réflecteurs théoriques, la signature cinématique d'un réflecteur théorique reliant la vitesse orthoradiale et la vitesse radiale de ce réflecteur théorique;
- des moyens (11, 12, 13) de création d'un filtre pour au moins une distance et une vitesse radiale données à partir :

- (E53) du déphasage d'un réflecteur théorique de type cible (MPC) à cette distance et pour cette vitesse radiale ; et
- (E52) du déphasage d'un réflecteur théorique de type fort (MPF) à cette distance et pour chacune des vitesses radiales de ladite zone (ZC);

ces déphasages étant obtenus à partir de ladite modélisation,
ledit filtre étant conçu pour atténuer par projection l'énergie des réflecteurs de forte énergie de ladite scène et augmenter par corrélation l'énergie dudit au moins un réflecteur cible de ladite scène à ladite au moins une distance et vitesse radiale données ;
- des moyens (11, 12, 13) d'obtention de profils distance obtenus par traitement desdites données radar brutes pour séparer les réflecteurs de ladite scène en distance, lesdits profils étant collectés (MDT) pendant un temps suffisamment long pour que la variation en distance d'un réflecteur de ladite scène puisse être considérée comme quadratique par rapport au temps ;
- des moyens (11, 12, 13) d'application des filtres sur lesdits profils distance, cette étape conduisant à une séparation en vitesse desdits réflecteurs de la scène; et
- des moyens (11, 12, 13) de détection dudit au moins un réflecteur cible parmi lesdits réflecteurs de forte énergie.


**Patentansprüche**

1. Verfahren, das in einem mobilen System verwendet wird, welches ein Radar umfasst, um in einer Szene wenigstens einen Zielreflektor eines vorbestimmten ersten Typs, sogenannten Zieltyps, zu erfassen, der geeignet ist, durch wenigstens einen Reflektor starker Energie eines zweiten Typs, sogenannten starken Typs, verdeckt zu werden, wobei dieses Verfahren umfasst:

- einen Schritt (P2) zur Identifikation eines Bereiches (ZC) des Distanz-Radialgeschwindigkeits-Raumes, der Reflektoren starker Energie enthalten kann, die geeignet sind, die Zielreflektoren zu verdecken;
wobei das Verfahren **dadurch gekennzeichnet ist, dass** es umfasst:
- einen Schritt (P3) zum Modellieren der durch den Doppler-Effekt bedingten Phasenverschiebung zweiter Ordnung im Laufe der Zeit, von theoretischen Reflektoren des Zieltyps und von theoretischen Reflektoren des starken Typs, wobei die Phasenverschiebung, die von der radialen Beschleunigung und von der orthoradialen Geschwindigkeit der theoretischen Reflektoren abhängig ist, die distanzmäßige Änderung der theoretischen Reflektoren in Bezug auf das mobile System zum Ausdruck bringt, wobei die Modellierung die kinematische Signatur der theoretischen Reflektoren verwendet, wobei die kinematische Signatur eines theoretischen Reflektors die orthoradiale Geschwindigkeit und die Radialgeschwindigkeit dieses theoretischen Reflektors verbindet;
- einen Schritt (P5) zum Erzeugen eines Filters für wenigstens eine gegebene Distanz und eine gegebene Radialgeschwindigkeit anhand:

- der Phasenverschiebung eines theoretischen Reflektors vom Zieltyp (MPC) in dieser Distanz und bei dieser Radialgeschwindigkeit; und
- der Phasenverschiebung eines theoretischen Reflektors vom starken Typ (MPF) in dieser Distanz und bei jeder der Radialgeschwindigkeiten des Bereiches (ZC);

wobei diese Phasenverschiebungen anhand der Modellierung erhalten werden,

wobei das Filter dazu ausgelegt ist, die Energie der Reflektoren starker Energie der Szene durch Projektion zu dämpfen und die Energie des wenigstens einen Zielreflektors der Szene in/mit der wenigstens einen gegebenen Distanz und Radialgeschwindigkeit durch Korrelation zu erhöhen;

- einen Schritt (P0) zum Beleuchten der Szene und zum Erfassen von Radarrohdaten aus den durch die Reflektoren der Szene reflektierten Echos;

- einen Schritt (P1) zum Erhalten von Distanz-Profilen, die durch Verarbeitung der Radarrohdaten, um die Reflektoren der Szene distanzmäßig zu trennen, gewonnen werden, wobei die Profile über eine Zeit gesammelt (MDT) werden, die lang genug ist, damit die distanzmäßige Änderung eines Reflektors der Szene in Bezug auf die Zeit als quadratisch betrachtet werden kann;

- einen Schritt (P4) zum Anlegen der Filter an die Distanz-Profile, wobei dieser Schritt zu einer geschwindigkeitsmäßigen Trennung der Reflektoren der Szene führt;

- einen Schritt zum Erfassen des wenigstens einen Zielreflektors unter den Reflektoren starker Energie.

2. Verfahren nach Anspruch 1, **dadurch gekennzeichnet, dass** das Filter ein Schrägprojektor ist.

3. Verfahren nach Anspruch 1 oder 2, **dadurch gekennzeichnet, dass** der Identifikationsschritt (P2) umfasst:

- einen Schritt zum Erstellen der Karte Distanz-Radialgeschwindigkeit, die aus den über eine kurze Zeit beobachteten Radarrohdaten hervorgegangen sind; und
- einen Schritt zur Analyse dieser Karte.

4. Verfahren nach Anspruch 1 oder 2, **dadurch gekennzeichnet, dass** der Schritt zur Identifikation (P2) eines Bereiches (ZC) anhand einer vorherigen Kenntnis der Beobachtungsgeometrie, des Antennendiagramms des Radars und der Flugeigenschaften des Systems durchgeführt wird.

5. Verfahren nach einem der Ansprüche 1 bis 4, **dadurch gekennzeichnet, dass** der Schritt (P1) zum Erhalten von Distanz-Profilen eine Verarbeitung (E11) zur Kompensation der distanzmäßigen Migration der Reflektoren über die lange Zeit umfasst.

6. Verfahren nach einem der Ansprüche 1 bis 5, **dadurch gekennzeichnet, dass** der Erfassungsschritt einen Detektor vom Typ CFAR verwendet.

7. Verfahren nach einem der Ansprüche 1 bis 5, **dadurch gekennzeichnet, dass** der Schritt zum Erfassen eines Zielreflektors und die Bewertung des Rauschpegels für ein Distanz-Radialgeschwindigkeits-Feld lediglich die gesammelten Distanz-Profile (MDT) in der genannten Distanz verwenden.

8. Verfahren nach einem der Ansprüche 1 bis 7, **dadurch gekennzeichnet, dass** der Schritt zum Beleuchten der Szene eine Wellenform vom Typ FMCW verwendet.

9. Verfahren nach einem der Ansprüche 1 bis 8, **dadurch gekennzeichnet, dass** die kinematische Signatur der Zielreflektoren durch eine orthoradiale Null-Geschwindigkeit definiert ist.

10. Erfassungsverfahren nach einem der Ansprüche 1 bis 9, **dadurch gekennzeichnet, dass** die Schritte (P2) zur Identifikation von Bereichen und (P3) zum Erzeugen der Filter vor, nach oder parallel zu den Schritten (P0) der Erfassung von Radarrohdaten und (P1) zum Erhalten von Distanz-Profilen durchgeführt werden können.

11. Computerprogramm (PG), umfassend Befehle für die Durchführung der Schritte des Erfassungsverfahrens nach einem der Ansprüche 1 bis 10, wenn das Programm durch einen Rechner (AS) ausgeführt wird.

12. Durch einen Rechner lesbarer Speicherträger (13), auf dem ein Computerprogramm gespeichert ist, das Befehle für die Durchführung der Schritte des Erfassungsverfahrens nach einem der Ansprüche 1 bis 10 umfasst.

13. Vorrichtung (10), einbaubar in ein mobiles System (100), um in einer Szene wenigstens einen Zielreflektor eines vorbestimmten ersten Typs, sogenannten Zieltyps, zu erfassen, der geeignet ist, durch wenigstens einen Reflektor starker Energie eines zweiten Typs, sogenannten starken Typs, verdeckt zu werden, wobei dieses mobile System umfasst:

- ein Radar (110), das geeignet ist, die Szene zu beleuchten und aus den durch Reflektoren der Szene reflektierten Echos Radarrohdaten zu erfassen;
- Mittel (11, 12, 13) zur Identifikation eines Bereiches (ZC) des Distanz-Radialgeschwindigkeits-Raumes, der Reflektoren starker Energie enthalten kann, die geeignet sind, die Zielreflektoren zu verdecken;
wobei die Vorrichtung **dadurch gekennzeichnet ist, dass** sie umfasst:
- Mittel (11, 12, 13) zum Modellieren der durch den Doppler-Effekt bedingten Phasenverschiebung zweiter Ordnung im Laufe der Zeit, von theoretischen Reflektoren des Zieltyps und von Reflektoren des starken Typs, wobei die Phasenverschiebung, die von der radialen Beschleunigung und von der orthoradialen Geschwindigkeit der theoretischen Reflektoren abhängig ist, die distanzmäßige Änderung der theoretischen Reflektoren in Bezug auf das mobile System zum Ausdruck bringt, wobei die Modellierung die kinematische Signatur der theoretischen Reflektoren verwendet, wobei die kinematische Signatur eines theoretischen Reflektors die orthoradiale Geschwindigkeit und die Radialgeschwindigkeit dieses theoretischen Reflektors verbindet;
- Mittel (11, 12, 13) zum Erzeugen eines Filters für wenigstens eine gegebene Distanz und eine gegebene Radialgeschwindigkeit anhand:

  - (E53) der Phasenverschiebung eines theoretischen Reflektors vom Zieltyp (MPC) in dieser Distanz und bei dieser Radialgeschwindigkeit; und
  - (E52) der Phasenverschiebung eines theoretischen Reflektors vom starken Typ (MPF) in dieser Distanz und bei jeder der Radialgeschwindigkeiten des Bereiches (ZC);

wobei diese Phasenverschiebungen anhand der Modellierung erhalten werden,
wobei das Filter dazu ausgelegt ist, die Energie der Reflektoren starker Energie der Szene durch Projektion zu dämpfen und die Energie des wenigstens einen Zielreflektors der Szene in/mit der wenigstens einen gegebenen Distanz und Radialgeschwindigkeit durch Korrelation zu erhöhen;
- Mittel (11, 12, 13) zum Erhalten von Distanz-Profilen, die durch Verarbeitung der Radarrohdaten, um die Reflektoren der Szene distanzmäßig zu trennen, gewonnen werden, wobei die Profile über eine Zeit gesammelt (MDT) werden, die lang genug ist, damit die distanzmäßige Änderung eines Reflektors der Szene in Bezug auf die Zeit als quadratisch betrachtet werden kann;
- Mittel (11, 12, 13) zum Anlegen der Filter an die Distanz-Profile, wobei dieser Schritt zu einer geschwindigkeitsmäßigen Trennung der Reflektoren der Szene führt; und
- Mittel (11, 12, 13) zum Erfassen des wenigstens einen Zielreflektors unter den Reflektoren starker Energie.

## Claims

1. A method implemented in a mobile system comprising a radar for detecting, in a scene, at least one target reflector of a first predetermined type, called target type, that may be concealed by at least one high-energy reflector of a second type, called strong type, said method comprising:

    - a step (P2) for identifying a zone (ZC) of the distance-radial velocity space that may contain high-energy reflectors capable of concealing the target reflectors;
    said method being **characterized in that** it comprises:
    - a step (P3) for modeling the order two phase shift over time, due to the Doppler effect, of theoretical reflectors of said target type and theoretical reflectors of said strong type, the phase shift, function of the radial acceleration and of the orthoradial velocity of said theoretical reflectors, translating the distance variation of said theoretical reflectors relative to said mobile system, said modeling using the kinematic signature of said theoretical reflectors, said kinematic signature of a theoretical reflector connecting the orthoradial velocity and the radial velocity of this theoretical reflector;
    - a step (P5) for creating a filter for at least one distance and one radial velocity given by:

        - the phase shift of a theoretical target reflector (MPC) at that distance and for that radial velocity; and
        - the phase shift of a theoretical strong reflector (MPF) at that distance and for each of the radial velocities of the zone (ZC);

    said phase shifts being obtained from the aforementioned modeling,
    said filter being designed to attenuate, by projection, the energy of the high-energy reflectors of said scene and increase, by correlation, the energy of said at least one target reflector of the scene at the given distance and for the given radial velocity;

- a step (P0) for illuminating the scene and acquiring raw radar data from the echoes reflected by the reflectors on the scene;
- a step (P1) for obtaining distance profiles obtained by processing raw radar data to separate the reflectors of the scene in terms of distance, said profiles being collected (MDT) over a long enough time for the distance variation of a reflector of the scene to be able to be considered quadratic relative to the time;
- a step (P4) for applying filters on said distance profiles, this step leading to a separation of the reflectors of the scene in velocity; and
- a step for detecting the target reflectors among the high-energy reflectors.

2. The method according to claim 1, **characterized in that** said filter is an oblique projector.

3. The method according to claim 1 or 2, **characterized in that** said identification step (P2) comprises:

- a step for building the distance-radial velocity cartography resulting from the raw radar data observed during a short time; and
- a step for analyzing that cartography.

4. The method according to claim 1 or 2, **characterized in that** the step for identifying (P2) the zone (ZC) in the distance velocity space is performed from a priori knowledge of the observation geometry, of the antenna diagram of said radar and of the characteristics of the flight of the system.

5. The method according to any one of claims 1 to 4, **characterized in that** said step (P1) for obtaining the distance profiles comprises a processing for (E11) compensating the distance migration of the reflectors over a long time.

6. The method according to any one of claims 1 to 5, **characterized in that** the detection step uses a detector of the CFAR type.

7. The method according to any one of claims 1 to 5, **characterized in that** the step for detecting the target reflectors and estimating the noise level, for a distance-radial velocity cell, uses only said collector distance profiles (MDT), at that distance.

8. The method according to any one of claims 1 to 7, **characterized in that** said step for illuminating the scene uses a waveform of the FMCW type.

9. The method according to any one of claims 1 to 8, **characterized in that** said kinematic signature of said target reflectors is defined by a zero orthoradial velocity.

10. The detection method according to any one of claims 1 to 9, **characterized in that** said steps (P2) for identifying zones and (P3) for creating filters may be performed before, after, or in parallel with steps (P0) for acquiring raw radar data and (P1) for obtaining distance profiles.

11. A computer program (PG) comprising instructions to carry out the steps of the detection method according to any one of claims 1 to 10 when said program is run by a computer (AS).

12. A recording medium (13) readable by a computer on which a computer program is recorded including instructions to carry out the steps of the detection method according to any one of claims 1 to 10.

13. A device (10) that may be incorporated in a mobile system (100) to detect, in a scene, at least one target reflector of a first predetermined type, called target type, that may be concealed by at least one high-energy reflector of a second type, called strong type, said mobile system comprising:

- a radar (110) capable of illuminating the scene and acquiring raw radar data from the echoes reflected by the reflectors of the scene;
- means (11, 12, 13) for identifying a zone (ZC) of the distance-radial velocity space that may contain high-energy reflectors capable of concealing the target reflectors; the device being **characterized in that** it comprises:
- means (11, 12, 13) for modeling the order two phase shift over time, due to the Doppler effect, of theoretical target reflectors and theoretical strong reflectors, the phase shift, function of the radial acceleration and of the orthoradial velocity of said theoretical reflectors, translating the distance variation of said theoretical reflectors relative to said mobile system, said modeling using the kinematic signature of said theoretical reflectors, said kinematic signature of a theoretical reflector connecting the orthoradial velocity and the radial velocity of this theoretical reflector;
- means (11, 12, 13) for creating a filter for at least one distance and one radial velocity given by:

    - (E53) the phase shift of a theoretical target reflector (MPC) at that distance and for that radial velocity; and
    - (E52) the phase shift of a theoretical strong reflector (MPF) at that distance and for each of the radial velocities of the zone (ZC);

said phase shifts being obtained from the aforementioned modeling, said filter being designed to attenuate, by projection, the energy of the high-energy reflectors of said scene and increase, by correlation, the energy of said at least one target reflector of the scene at the given distance and for the given radial velocity;
- means (11, 12, 13) for obtaining distance profiles obtained by processing raw radar data to separate the reflectors of the scene in terms of distance, said profiles being collected (MDT) over a long enough time for the distance variation of a reflector of the scene to be able to be considered quadratic relative to the time;
- means (11, 12, 13) for applying filters on said distance profiles, this step leading to a separation of the reflectors of the scene in velocity; and
- means (11, 12, 13) for detecting the target reflectors among the high-energy reflectors.

**FIG.1**

FIG.2

FIG.3

FIG.4

FIG.5

(P4)

E41

MDT(d)
F(d,Vrad)

FILTRAGE DU
FOUILLIS ET
TRAITEMENT VITESSE
CIBLE

MDV(d,Vrad)

E42

Porth(d)
MDT(d)

ESTIMATION DU
BRUIT

NB(d,Vrad)

E43

Pfa

DÉTECTION

Détections

**FIG.6**

(P5)

E52

CRÉATION MATRICE
DES DÉPHASAGES
DES RÉFLECTEURS
DE TYPE « FORT »

MPF(d)

E53

CRÉATION MATRICE
DES DÉPHASAGES
DES RÉFLECTEURS
DE TYPE « CIBLE »

MPC(d)

E54

CALCUL DE LA
MATRICE DE
PROJECTION
ORTHOGONALE À
UNE DISTANCE
DONNÉE

Porth(d)

E55

CRÉATION DES FILTRES

F(d,Vrad)

**FIG.7**

PYL1

d1

PYL2

d2

d3=d2

PYL3

100

**FIG.8**

PYL2

V$_{rad}$

V$_{rad}$      PYL3

Va      -Va

Vorth

100

**FIG.9**

PYL

Vrad

Vrad      C

Vrel

Vorth

Va

100

**FIG.10**

**FIG.11**

**FIG.12**

**FIG.13**

**FIG.14**

**FIG.15a**

**FIG.15b**

**FIG.16**

FIG.17

**FIG.18**

**FIG.19**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

• EP 2320247 A

**Littérature non-brevet citée dans la description**

• **WANG et al.** Manoeuvring target detection in over-the-horizon radar using adaptive clutter rejection and adaptive chirplet transform. *IEE Proc. Radar Navig,* 04 Novembre 2003, vol. 150 (4